# EUROPEAN PATENT SPECIFICATION

(11) **EP 3 395 561 B1**
(45) Date of publication and mention of the grant of the patent: **30.12.2020**
(21) Application number: 17382222.2
(22) Date of filing: 26.04.2017
(51) Int. Cl.: B32B 3/12, B31D 3/00, B31D 3/02, B29D 99/00, E04C 2/36, B64C 1/00, B64C 27/473, F01D 5/28, A43B 1/00, B33Y 80/00

(54) **THREE DIMENSIONAL AUXETIC STRUCTURE, MANUFACTURING METHOD AND TOOLING**
DREIDIMENSIONALE AUXETISCHE STRUKTUR, HERSTELLUNGSVERFAHREN UND WERKZEUG
STRUCTURE AUXÉTIQUE EN TROIS DIMENSIONS, PROCÉDÉ DE FABRICATION ET OUTILLAGE

(43) Date of publication of application: 31.10.2018
(73) Proprietor: Airbus Operations, S.L., 28906 Getafe Madrid (ES)
(72) Inventor: VÉLEZ DE MENDIZÁBAL ALONSO, Iker, 28906 Getafe (ES); MARTINO GONZÁLEZ, Esteban, 28906 Getafe (ES); APELLANIZ DE LA FUENTE, David, 28906 Getafe (ES); PARRA RUBIO, Alfonso, 28906 Getafe (ES); MOYA SANZ, Elena, 28906 Getafe (ES)
(74) Representative: Elzaburu S.L.P.

(56) References cited:
- DE-A1- 10 323 367
- US-A1- 2004 102 303
- DAVID Y FOZDAR ET AL: "Three-Dimensional Polymer Constructs Exhibiting a Tunable Negative Poisson's Ratio", ADVANCED FUNCTIONAL MATERIALS, WILEY - V C H VERLAG GMBH & CO. KGAA, DE, vol. 21, no. 14, 22 July 2011 (2011-07-22) , pages 2712-2720, XP001564174, ISSN: 1616-301X, DOI: 10.1002/ADFM.201002022 [retrieved on 2011-05-11]
- MARYAM EIDINI: "Zigzag-base folded sheet cellular mechanical metamaterials", EXTREME MECHANICS LETTERS, vol. 6, 1 March 2016 (2016-03-01), pages 96-102, XP055415339, ISSN: 2352-4316, DOI: 10.1016/j.eml.2015.12.006

## Description

### Field of the invention

The present invention is related to a three dimensional auxetic structure that can be made from a sheet material or by 3D printing. Specifically it refers to a cellular material for a sandwich panel used in aircraft construction, shipbuilding, and other branches of industry and its associated manufacturing method and mold.

### Background of the invention

Conventional materials found in nature have positive Poisson ratio, they get thinner when stretched and fatter when compressed, following the Poisson ratio equation: ${γ}_{yx} = - \frac{transverse strain}{axial strain} = - \frac{{ε}_{x}}{{ε}_{y}}$

Accordingly, Poisson's ratio is defined as the negative of the transverse strain divided by the longitudinal strain.

There are materials or structure geometries configurations that exhibit opposite behaviour, that are called auxetic, having a negative Poisson ratio and when stretched, they become thicker perpendicular to the applied force, and thinner when compressed. Therefore, applying a unidirectional tensile force to auxetic material results in an increase in size in the transverse dimension. The behaviour of said configuration under impact, which is equivalent to a compression, is that it concentrates material around the impact area due to the negative poisson nature of these configurations.

Are also known two dimensional auxetic structures having a cell arrangement comprising a plurality of adjoining cells being shaped as inverted hexagons that present an auxetic behaviour in the two in-plane directions of the cells geometry.

Cellular solids are used in a variety of engineering applications and conventional honeycomb hollow cell sandwich structures have become widely used for their strength and lightness. Said geometries of conventional cellular structures have been used as cores in sandwich panels within, for example, the aerospace and marine industry.

It is known document DE10323367 disclosing a construction component, at least one surface of which has an auxetic lattice structure.

It is also known document US2004102303 disclosing a folded core structure produced by embossing fold lines into a flat planar material web, initiating folds along the fold lines on the upper and lower surfaces of the material web, proceeding with the formation of the folds along the fold lines to deform the material web from its two-dimensional starting configuration to a three-dimensional folded configuration, and post-processing the folded material web to stabilize or fix the folded configuration thereof. A composite structural panel is produced by bonding a cover layer onto at least one surface of the folded core structure.; An apparatus preferably includes embossing or creasing rolls to form the fold lines in the material web, air nozzles or folding rolls to initiate the folding process, bristle brush rolls to complete the folding process, and further folding rolls to enhance and fix the folded configuration, optionally in connection with heating, cooling, applying a coating onto, or impregnating a resin or binder into the material web.

### Summary of the invention

The purpose of this invention is to provide a three dimensional structure with a three dimensional auxetic behaviour to be used as an elementary structure in a three dimensional tessellation. The invention is defined by claims 1, 13 and 15.

The structure object of the invention is a three dimensional auxetic structure, comprising a plurality of adjoining hollow cells, each hollow cell having cell walls and the transversal cross section of the plurality hollow cells following a two dimensional auxetic pattern wherein each cell wall comprises folding lines parallel to the plane containing the auxetic pattern such that peaks and valleys are defined in the cell walls and being the cell walls foldable along said folding lines.

The structure is therefore a mixture of a conventional auxetic two dimensional pattern, for instance inverted hexagons, with kinked walls having folding lines. Said structure can be manufactured by 3D printing or by appropriately folding a sheet of material.

As previously stated, the invention can be achieved by means of a flat continuous sheet material to which an specific folding pattern is apllied, a so called origami map. This folding pattern provides both the cell construction and the three dimensional auxetic behavior of the cell structure. Therefore, the claimed structure behaves as auxetic in the three directions of the space, independently of the direction in which the force is applied. The claimed geometry shows a kinematic behavior of one degree of freedom.

This behavior is highly interesting because this structure can be used as a shape changing morphing structure. Just by controlling one of its characteristic distances, the movement of the full tessellation is controlled and predicted.

Unlike the conventional or re-entrant bidimensional hexagonal, this structure has the characteristic of reducing its dimension or condensate on the other two directions when it is compressed on the direction of the hollows. The condensation capability can be controlled by the angle of the re-entrant cells in combination with the angle of the kinked walls.

It is also an object of the present invention a sandwich panel that comprises a core structure having a three dimensional auxetic cell configuration according to the previously described one, located between and upper and a lower skin. Such cell geometry can be integrated as the core structure of a composite sandwich panel embedded between CFRP, GFRP, AFRP fabric or metallic skins.

Said sandwich panel having an auxetic behaviour on the three directions of space can be used as an elementary part for lightweight composite parts with potential applications that require high impact energy absorption, acoustic damping, load carrying structures or morphing structures.

The claimed auxetic structure is able to be folded and unfolded from a continuous flat pattern. This characteristic allows the structure to be manufactured from flat preforms, for example, conventional fabrics or prepreg, or even with thin metal sheets. Additionally, these preforms could be combined with other materials, such as ceramics, in order to achieve multifunctional structures (impacts, structure, acoustic damping...).

The manufacturing method comprises the following steps:
- providing a sheet of material,
- performing on said sheet of material a set of straight parallel folding lines in one direction for forming the walls of the cells,
- performing kinked folding lines in perpendicular direction to the straight folding lines such that at each intersection with the straight folding lines, the kinked lines are kinked with an opposite angle with respect to the straight folding line, the straight and the kinked folding lines being configured such that the straight folding lines define the perimeter of the auxetic cell pattern when the sheet is folded by the kinked lines,
- folding the sheet of material along the folding lines for obtaining at least a part of the three dimensional auxetic structure,
- curing the structure, if the sheet material is a plastic composite sheet.

In order to achieve such structure, a specific tooling is develepod, which performs the different foldings for each wall cell and keeps them in their position, which is specially advantageous for composite materials based cells, for which typically a resin curing or injection process is later required.

The tooling comprises a plurality of panels having kinked walls for accommodating a sheet of composite material inbetween, said kinked panels defining at least part of a hollow cell, the transversal cross section of the hollow cell following a two dimensional auxetic pattern, the kinked panels comprising folding lines parallel to the plane containing the auxetic pattern such that peaks and valleys are defined in the cell panels.

### Description of the figures

To complete the description and in order to provide for a better understanding of the invention, a set of drawings is provided. Said drawings form an integral part of the description and illustrate preferred embodiments of the invention. The drawings comprise the following figures.
Figure 1 shows an embodiment of a two-dimensional conventional honeycomb configuration and a two-dimensional modified auxetic honeycomb configuration known in the state of the art.
Figure 2 shows an embodiment of an embodiment of a foldable sheet material.
Figure 3 shows a perspective view of an embodiment of the three-dimensional hollow cell arrangement corresponding to the object of the invention.
Figure 4 shows a sectional view of a sandwich panel comprising a first embodiment having a three-dimensional auxetic structure according to the invention in which the structure is located with the hollow direction of the cells parallel to the upper and lower sandwich panels.
Figure 5 shows a sectional view of a sandwich panel comprising a second embodiment having a three-dimensional auxetic structure according to the invention in which the structure is located with the hollow direction of the cells perpendicular to the upper and lower sandwich panels.
Figure 6 shows a fuselage cross-section of an aircraft comprising an airframe integrated shield.
Figure 7 shows a fuselage cross-section of an aircraft comprising an airframe added shield.
Figure 8 shows a blade cross-section comprising an auxetic structure according to one embodiment of the invention.
Figures 9 to 11 shows the process of cut and folding of the sheet of figure 2.
Figure 12 shows an embodiment of a tooling for manufacturing a three dimensional auxetic structure.

### Detailed description of the invention

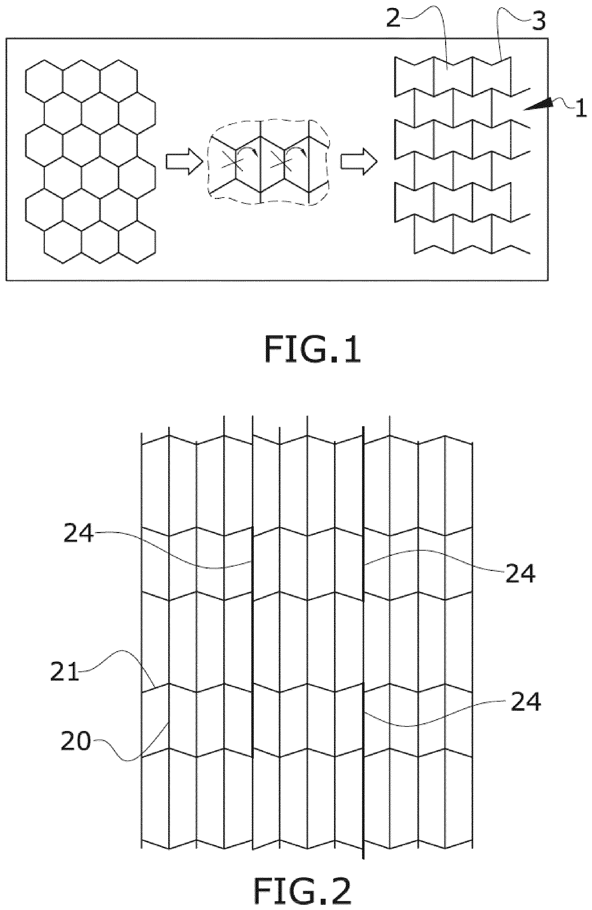

Figure 1 shows a known embodiment of a two-dimensional auxetic pattern (1) in which each cell (2) is angled in the form of a polygon having a plurality of edges and vertices, more specifically, an re-entrant hexagonal auxetic cell (2). Each cell (2) defines an internal air-filled cavity.

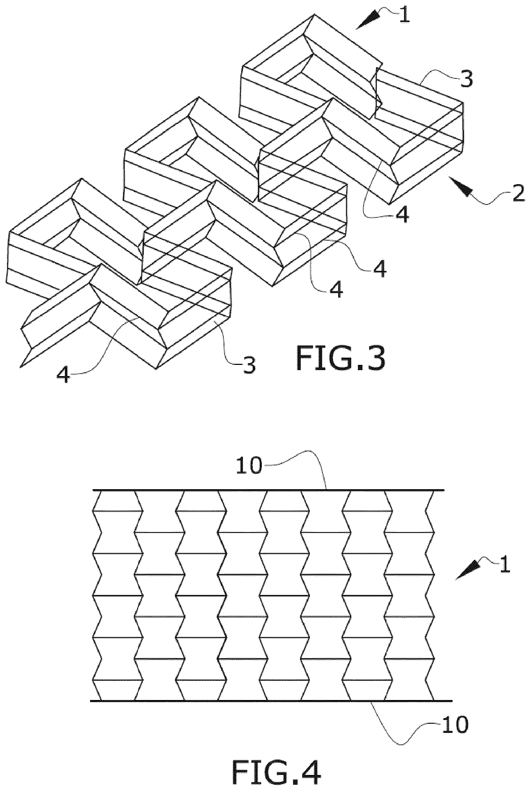

Considering Figure 3, the XY plane can be taken as the plane comprising the auxetic pattern (1) formed by cells wall (3) extending in a direction normal to the XY plane, the structure has an auxetic behaviour on three dimensions. When the structure is contracted in one of the directions, X,Y or Z it contracts also on the other two directions, and when it is expanded in one diretion X,Y or Z it expands also on the other two directions.

The shown structure comprises a plurality of adjoining hollow cells (2), each hollow cell (2) having cell walls (3). The transversal cross section of the plurality hollow cells (2) follows a two dimensional auxetic pattern (1) as shown in Figure 1. Each cell wall (3) comprises folding lines (4) parallel to the plane containing the auxetic pattern (1) such that peaks and valleys are defined in the cell walls (3). The cell walls (3) are foldable along said folding lines (4) and therefore can be extended and compressed in the hollow direction of the cells (2).

The claimed structure can be made by 3D printing using a thermoplastic or melting material or as depicted in Figure 2 it can be made from a sheet material, comprising zigzagging folding lines defining the cell walls (3) to obtain the desired configuration in order to achieve a three dimension directions auxetic behaviour from a continuous layer of, for instance, prepeg plies.

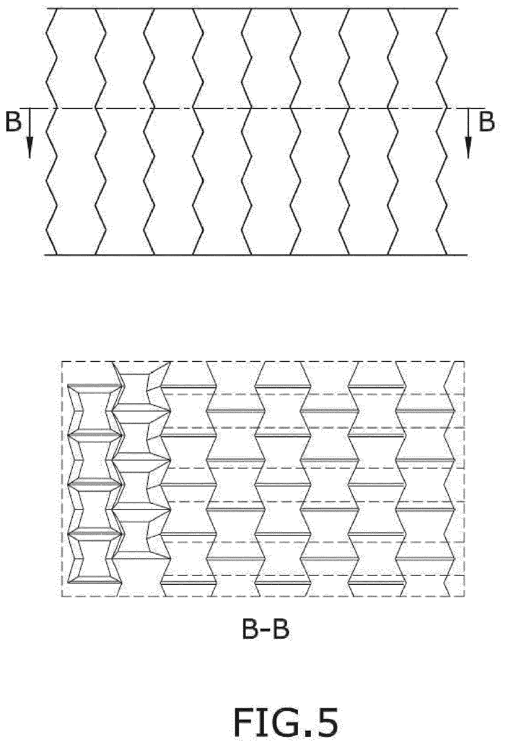

Figure 5 discloses a sectional view of a sandwich panel comprising a first embodiment having a three-dimensional auxetic core structure according to an embodiment of the invention in which the structure is located with the hollow direction of the cells (2) perpendicular to the upper and lower sandwich panels (10). When this sandwich panels are subjected to compression forces normal to the panels (10), the sandwich core tends to contract on the other two directions, generation a condensation of material on the impact point. This condensation of material provides additional capability to resist impact and penetration normal to the sandwich panel (10).

Other advantage of this core is that the failure of the cell walls (3) is more progressive and transmits deformation to a larger part of the surrounding structure, so they are able to absorb more energy than the case when the cell walls (3) are not folded. On the conventional core without folded cell walls (3), they are rigid when they are stable but they become very soft and fail very fast when they start to buckle in compression without being able to deform the surrounding structure.

One additional advantages of this core configuration is that when the distance between the panels (10) is not constant, this configuration is able to adapt to the variations of thickness or shape, as it is the case for example on an aerodynamic profile. In a conventional honeycomb core it is necessary to perform machining in order to adapt to non-uniform sandwich thickness shapes.

Figure 4 discloses a sectional view of a sandwich panel comprising a second embodiment having a three-dimensional auxetic structure according to an embodiment of the invention in which the structure is located with the hollow direction of the cells (2) parallel to the upper and lower sandwich panels (10). This embodiment provides the additional advantage of not generating closed cells in between the sandwich panels allowing a better drenage of possible water ingested by the sandwich core.

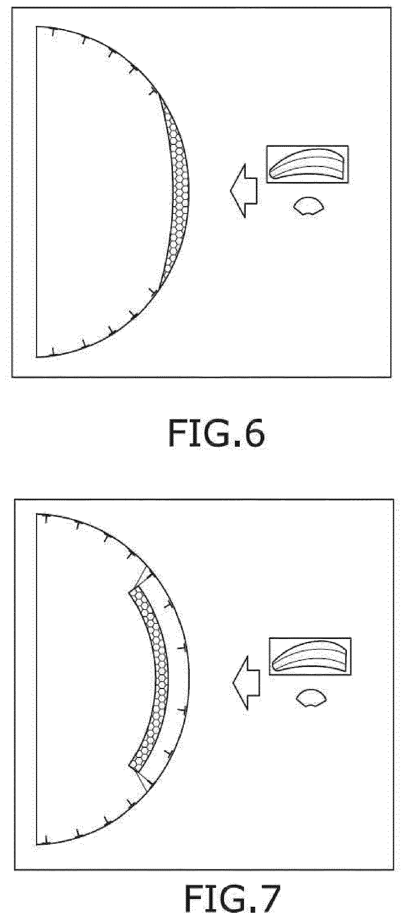

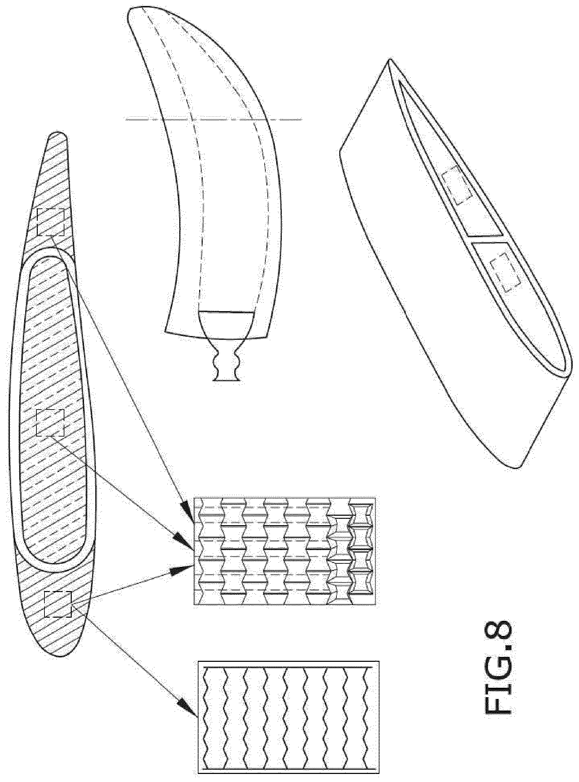

Figures 6, 7 and 8 show possible applications to an aircraft:
A. Fuselage and empennage skins Shielding against engine debris and other impact threats.
B. Lifting surface LE shielding against bird and other impact threats. Sandwich can be just a panel surrounding the perimeter of aero dynamic profile or can cover the full cavity of the profile section or part of the profile section (LE, box or TE). The proposed core is able to adapt to thickness variations of the sandwich due to the profile non-contact thickness.
C. Propeller and Turbofan engine blades.

Figures 2 and 9 to 11 show an embodiment for the method for manufacturing a three dimensional auxetic structure from a sheet material.

The sheet material is the one disclosed in figure 2 having straight folding lines (20) in one direction for forming the walls of the cells (2) and kinked folding lines (21) in perpendicular direction to the straight folding lines (20), said folding lines (20, 21) defining the edges of the perimeter of the auxetic cell (2) pattern when folded.

More specifically, figures 2 and 9 to 10 show a pattern having a re-entrant hexagonal auxetic cell (2) from which a complete cell (2) and an omega (22), being the omega (22) half of an hexagonal cell (2) are formed by folding and cutting the sheet.

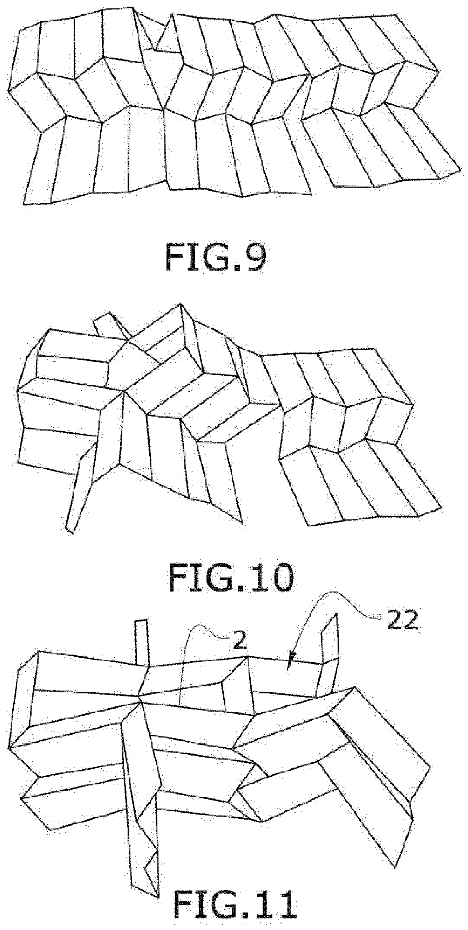

In the specific embodiment of figures 9 and 11, each of the walls (3) comprises three different folding lines and it is able to make up an omega (22) of the pattern. The sheet is cut along forth straight line (24) along the sections of the U-shape of the omega in first instance and along the eight straight line along the sections different from the bottom section of the U-shape.

The number of folded straight lines (4) in between the straight lines (24) containing the cut, can be different number than three. This number determines the number of folding lines that comprises the cell walls (3) of the resulting three dimensional auxetic structure.

As showed on figure 2, a particularity of this method is that at the intersection of each straight folding line (20) with the kinked line (21), the kinked lines (21) are kinked in an opposite angle with the straight line (20), except at the intersection with the straight lines (24) containing the cut, where the kinked lines (21) are kinked with the same angle with the straight line (20).

This methodology has the adventage that allows to generate more than one row of omegas at a time with the same sheet to cover a large surface, by increasing the number of folded straight lines (20), instead of just one as described on figures 2, 9 and 11.

As showed in figure 11, once formed the omegas and cut, the straight lines (24) containing the cut are turned around so that the upper and lower parts of the U shape of the resulting segments are touching each other and can be joined together by bounding, co-curing or other mechanical joint to form the desired hollow structure ausxetic structure.

An alternative methodology to generate the three dimensional auxetic structure is to fold several independent sheets to generate each one a row of omegas that are joined by their upper and lower part of the U shapes of the omegas.

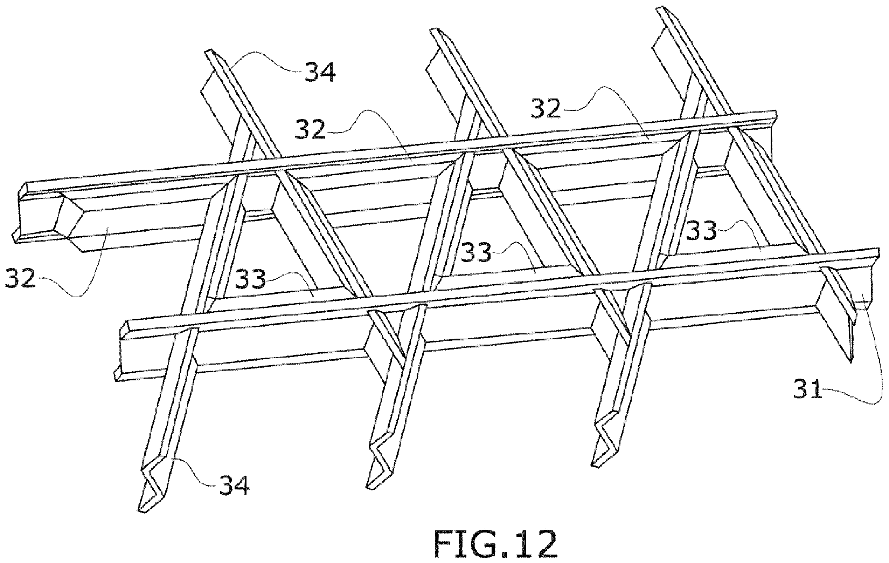

Figure 12 discloses an embodiment of the tooling to generate the row of omegas that consists of a rear panel (30) and a front panel (31) having corresponding counter panels (32, 33) and different blades (34) for forming the two legs of the omega shape which alternatively goes through the rear and front panels (30, 31). These blades (34) go through the tooling of the open side of the half cell until and rest on a counter-panel part that shapes the closed side of the half cell. This is repeated alternatively for each of the half cells of the flat sheet.

## Claims

1. Three dimensional auxetic structure, comprising a plurality of adjoining hollow cells (2), each hollow cell (2) having cell walls (3) and the transversal cross section of the plurality hollow cells (2) following a two dimensional auxetic pattern (1), **characterised in that** each cell wall (3) comprises folding lines (4) parallel to the plane containing the auxetic pattern (1) such that peaks and valleys are defined in the cell walls (3) and the cell walls (3) being foldable along said folding lines (4).

2. Three dimensional auxetic structure, according to claim 1, wherein the two dimensional auxetic pattern (1) comprises hollow cells that are angled in the form of a polygon having a plurality of edges and vertices.

3. Three dimensional auxetic structure, according to claim 2, wherein the polygon is an re-entrant hexagonal auxetic cell.

4. Three dimensional auxetic structure, according to any preceding claim, wherein the cell walls (3) are made from a sheet material.

5. Three dimensional auxetic structure, according to claim 4, wherein the sheet material is a composite preform, a fabric or a unidirectional preform.

6. Three dimensional auxetic structure, according to claim 5, wherein the composite sheet is a prepeg ply.

7. Three dimensional auxetic structure, according to claim 4, wherein the sheet material is a thin metal sheet preform.

8. Three dimensional auxetic structure, according any preceding claim 1 to 3, wherein the cell walls (3) are made from a thermoplastic material.

9. Sandwich panel **characterised in that** it comprises a core structure having a three dimensional auxetic structure according to any preceding claim located between and upper and a lower skin (10).

10. Fuselage of an aircraft **characterised in that** it comprises a sandwich panel according to claim 9 for absorbing impacts.

11. Lifting surface of an aircraft **characterised in that** it comprises a sandwich panel according to claim 9 for absorbing impacts.

12. Blade of an engine of an aircraft **characterised in that** it comprises a sandwich panel according to claim 9 for absorbing impacts.

13. Method for manufacturing a three dimensional auxetic structure, the three dimensional auxetic structure comprising a plurality of adjoining hollow cells (2), each hollow cell (2) having cell walls (3) and the transversal cross section of the plurality hollow cells (2) following a two dimensional auxetic pattern (1), each cell wall (3) comprising folding lines (4) parallel to the plane containing the auxetic pattern (1) such that peaks and valleys are defined in the cell walls (3) and the cell walls (3) being foldable along said folding lines (4), the method comprising the following steps:
- providing a sheet of material,
- performing on said sheet of material a set of straight parallel folding lines in one direction for forming the walls of the cells,
- performing kinked folding lines in perpendicular direction to the straight folding lines such that at each intersection with the straight folding lines, the kinked lines are kinked with an opposite angle with respect to the straight folding line, the straight and the kinked folding lines being configured such that the straight folding lines define the perimeter of the auxetic cell pattern when the sheet is folded by the kinked lines,
- folding the sheet of material along the folding lines for obtaining at least a part of the three dimensional auxetic structure.

14. Method according to claim 13, wherein the material is a plastic composite sheet and the obtained three dimensional auxetic structure is cured.

15. Tooling for manufacturing a three dimensional auxetic structure, the three dimensional auxetic structure comprising a plurality of adjoining hollow cells (2), each hollow cell (2) having cell walls (3) and the transversal cross section of the plurality hollow cells (2) following a two dimensional auxetic pattern (1), the tooling comprising a plurality of panels having kinked walls for accommodating a sheet of composite material inbetween, said kinked panels defining at least part of a hollow cell, the transversal cross section of the hollow cell (2) following a two dimensional auxetic pattern (1), the kinked panels comprising folding lines (4) parallel to the plane containing the auxetic pattern (1) such that peaks and valleys are defined in the cell panels (3).

## Patentansprüche

1. Dreidimensionale auxetische Struktur, umfassend eine Vielzahl von aneinandergrenzenden hohlen Zellen (2), wobei jede hohle Zelle (2) Zellwände (3) aufweist und der transversale Querschnitt der Vielzahl von hohlen Zellen (2) einem zweidimensionalen auxetischen Muster (1) folgt, **dadurch gekennzeichnet, dass** jede Zellwand (3) Faltlinien (4) parallel zu der Ebene, die das auxetische Muster (1) aufweist, umfasst, so dass Maxima und Minima in den Zellwänden (3) definiert sind und die Zellwände (3) entlang den Faltlinien (4) faltbar sind.

2. Dreidimensionale auxetische Struktur nach Anspruch 1, wobei das zweidimensionale auxetische Muster (1) hohle Zellen umfasst, die in der Form eines Vielecks mit einer Vielzahl von Kanten und Scheitelpunkten gewinkelt sind.

3. Dreidimensionale auxetische Struktur nach Anspruch 2, wobei das Vieleck eine einspringende hexagonale auxetische Zelle ist.

4. Dreidimensionale auxetische Struktur nach einem der vorhergehenden Ansprüche, wobei die Zellwände (3) aus einem Bogenmaterial hergestellt sind.

5. Dreidimensionale auxetische Struktur nach Anspruch 4, wobei das Bogenmaterial eine zusammengesetzte Vorform, ein Gewebe oder eine unidirektionale Vorform ist.

6. Dreidimensionale auxetische Struktur nach Anspruch 5, wobei der zusammengesetzte Bogen eine vorimprägnierte Lage ist.

7. Dreidimensionale auxetische Struktur nach Anspruch 4, wobei das Bogenmaterial eine dünne Metallblech-Vorform ist.

8. Dreidimensionale auxetische Struktur nach einem der Ansprüche 1 bis 3, wobei die Zellwände (3) aus einem thermoplastischen Material hergestellt sind.

9. Sandwichplatte, **dadurch gekennzeichnet, dass** sie eine Kernstruktur mit einer dreidimensionalen auxetischen Struktur nach einem der vorhergehenden Ansprüche aufweist, angeordnet zwischen einer oberen und einer unteren Haut (10).

10. Rumpf eines Luftfahrzeugs, **dadurch gekennzeichnet, dass** er eine Sandwichplatte nach Anspruch 9 zum Absorbieren von Einwirkungen umfasst.

11. Hebefläche eines Luftfahrzeugs, **dadurch gekennzeichnet, dass** sie eine Sandwichplatte nach Anspruch 9 zum Absorbieren von Einwirkungen umfasst.

12. Schaufel eines Motors eines Luftfahrzeugs, **dadurch gekennzeichnet, dass** sie eine Sandwichplatte nach Anspruch 9 zum Absorbieren von Einwirkungen umfasst.

13. Verfahren zum Herstellen einer dreidimensionalen auxetischen Struktur, die dreidimensionale auxetische Struktur umfassend eine Vielzahl von aneinandergrenzenden hohlen Zellen (2), wobei jede hohle Zelle (2) Zellwände (3) aufweist und der transversale Querschnitt der Vielzahl von hohlen Zellen (2) einem zweidimensionalen auxetischen Muster (1) folgt, jede Zellwand (3) umfassend Faltlinien (4) parallel zu der Ebene, die das auxetische Muster (1) aufweist, so dass Maxima und Minima in den Zellwänden (3) definiert sind und die Zellwände (3) entlang den Faltlinien (4) faltbar sind, das Verfahren die folgenden Schritte umfassend:
- Bereitstellen eines Bogens von Material,
- Durchführen an dem Bogen von Material eines Satzes von geraden parallelen Faltlinien in einer Richtung zum Bilden der Wände der Zellen,
- Durchführen von geknickten Faltlinien in senkrechter Richtung zu den geraden Faltlinien, so dass die geknickten Linien an jedem Schnittpunkt mit den geraden Faltlinien mit einem entgegengesetzten Winkel in Bezug auf die gerade Faltlinie geknickt sind, die geraden und die geknickten Faltlinien derart konfiguriert sind, dass die geraden Faltlinien den Umfang des auxetischen Zellenmusters definieren, wenn der Bogen an den geknickten Linien gefaltet wird,
- Falten des Bogens von Material entlang den Faltlinien, um mindestens einen Teil der dreidimensionalen auxetischen Struktur zu erlangen.

14. Verfahren nach Anspruch 13, wobei das Material ein zusammengesetzter Kunststoffbogen ist und die erlangte dreidimensionale auxetische Struktur ausgehärtet wird.

15. Werkzeugbestückung zum Herstellen einer dreidimensionalen auxetischen Struktur, die dreidimensionale auxetische Struktur umfassend eine Vielzahl von aneinandergrenzenden hohlen Zellen (2), wobei jede hohle Zelle (2) Zellwände (3) aufweist und der transversale Querschnitt der Vielzahl von hohlen Zellen (2) einem zweidimensionalen auxetischen Muster (1) folgt, die Werkzeugbestückung umfassend eine Vielzahl von Platten mit geknickten Wänden zum Aufnehmen eines Bogens von zusammengesetztem Material dazwischen, wobei die geknickten Platten mindestens einen Teil einer hohlen Zelle definieren, der transversale Querschnitt der hohlen Zelle (2) einem zweidimensionalen auxetischen Muster (1) folgt, die geknickten Platten Faltlinien (4) parallel zu der Ebene, die das auxetische Muster (1) enthält, umfassen, so dass Maxima und Minima in den Zellplatten (3) definiert sind.

## Revendications

1. Structure auxétique tridimensionnelle, comprenant une pluralité de cellules creuses (2) adjacentes, chaque cellule creuse (2) présentant des parois (3) de cellule et la section transversale de la pluralité cellules creuses (2) suivant un motif auxétique bidimensionnel (1), **caractérisée en ce que** chaque paroi (3) de cellule comprend des lignes de pliage (4) parallèles au plan contenant le motif auxétique (1) de manière à définir des crêtes et des creux dans les parois (3) de cellule et les parois (3) de cellule étant pliables selon lesdites lignes de pliage (4).

2. Structure auxétique tridimensionnelle selon la revendication 1, dans laquelle le motif auxétique bidimensionnel (1) comprend des cellules creuses qui sont inclinées sous la forme d'un polygone présentant une pluralité d'arêtes et de sommets.

3. Structure auxétique tridimensionnelle selon la revendication 2, dans laquelle le polygone est une cellule auxétique polygonale rentrante.

4. Structure auxétique tridimensionnelle selon l'une quelconque des revendications précédentes, dans laquelle les parois (3) de cellule sont constituées d'un matériau en feuille.

5. Structure auxétique tridimensionnelle selon la revendication 4, dans laquelle le matériau en feuille est une préforme composite, un tissu ou une préforme unidirectionnelle.

6. Structure auxétique tridimensionnelle selon la revendication 5, dans laquelle la feuille composite est un pli de préimprégné.

7. Structure auxétique tridimensionnelle selon la revendication 4, dans laquelle le matériau en feuille est une préforme de feuille de métal mince.

8. Structure auxétique tridimensionnelle selon l'une quelconque des revendications 1 à 3, dans laquelle les parois (3) de cellule sont constituées d'une matière thermoplastique.

9. Panneau sandwich, **caractérisé en ce qu'**il comprend une structure âme présentant une structure auxétique tridimensionnelle selon l'une quelconque des revendications précédentes placée entre un revêtement supérieur et un revêtement inférieur (10).

10. Fuselage d'un aéronef, **caractérisé en ce qu'**il comprend un panneau sandwich selon la revendication 9 destiné à absorber les chocs.

11. Surface portante d'un aéronef, **caractérisée en ce qu'**elle comprend un panneau sandwich selon la revendication 9 destiné à absorber les chocs.

12. Aube d'un moteur d'un aéronef, **caractérisée en ce qu'**elle comprend un panneau sandwich selon la revendication 9 destiné à absorber les chocs.

13. Procédé de fabrication d'une structure auxétique tridimensionnelle, la structure auxétique tridimensionnelle comprenant une pluralité de cellules creuses (2) adjacentes, chaque cellule creuse (2) présentant des parois (3) de cellule et la section transversale de la pluralité de cellules creuses (2) suivant un motif auxétique bidimensionnel (1), chaque paroi (3) de cellule comprenant des lignes de pliage (4) parallèles au plan contenant le motif auxétique (1) de manière à définir des crêtes et des creux dans les parois (3) de cellule et les parois (3) de cellule étant pliables selon lesdites lignes de pliage (4), le procédé comprenant les étapes suivantes :
- fourniture d'une feuille de matériau,
- réalisation, sur ladite feuille de matériau, d'un ensemble de lignes de pliage droites parallèles dans une direction pour former les parois des cellules,
- réalisation de lignes de pliage coudées dans une direction perpendiculaire aux lignes de pliage droites de telle sorte qu'à chaque intersection avec les lignes de pliage droites, les lignes coudées soient coudées en formant un angle opposé avec la ligne de pliage droite, les lignes de pliage droites et coudées étant configurées de telle sorte que les lignes de pliage droites définissent le périmètre du motif auxétique de cellules lorsque la feuille est pliée par les lignes coudées,
- pliage de la feuille de matériau selon les lignes de pliage pour obtenir au moins une partie de la structure auxétique tridimensionnelle.

14. Procédé selon la revendication 13, dans lequel le matériau est une feuille de plastique composite et la structure auxétique tridimensionnelle obtenue est cuite.

15. Outillage pour la fabrication d'une structure auxétique tridimensionnelle, la structure auxétique tridimensionnelle comprenant une pluralité de cellules creuses (2) adjacentes, chaque cellule creuse (2) présentant des parois (3) de cellule et la section transversale de la pluralité de cellules creuses (2) suivant un motif auxétique bidimensionnel (1), l'outillage comprenant une pluralité de panneaux présentant des parois coudées pour accueillir entre eux une feuille de matériau composite, lesdits panneaux coudés définissant au moins une partie d'une cellule creuse, la section transversale de la cellule creuse (2) suivant un motif auxétique bidimensionnel (1), les panneaux coudés comprenant des lignes de pliage (4) parallèles au plan contenant le motif auxétique (1) de manière à définir des crêtes et des creux dans les panneaux (3) de cellule.
